# EUROPÄISCHE PATENTSCHRIFT

(11) **EP 0 528 319 B1**
(45) Veröffentlichungstag und Bekanntmachung des Hinweises auf die Patenterteilung: **12.10.1994**
(21) Anmeldenummer: 92113596.8
(22) Anmeldetag: 10.08.1992
(51) Int. Cl.: B60K 17/346, F16H 47/04

(54) **Fahrzeuggetriebe mit Zentraldifferential**
Vehicle transmission with centre differential
Transmission pour véhicules avec différentiel central

(30) Priorität: 17.08.1991 DE 4127266
(43) Veröffentlichungstag der Anmeldung: 24.02.1993
(73) Patentinhaber: DEERE & COMPANY, Moline, Illinois 61265 (US)
(72) Erfinder: Weiss, Heinz, W-6140 Bensheim (DE); Kiefer, Heiko, W-6800 Mannheim 71 (DE)
(74) Vertreter: Feldmann, Bernhard

(56) Entgegenhaltungen:
- WO-A-92/12361
- FR-A- 2 592 842
- PATENT ABSTRACTS OF JAPAN vol. 14, no. 75 (M-0934)13. Februar 1990 & JP-A-12 93 228
- PATENT ABSTRACTS OF JAPAN vol. 10, no. 181 (M-492)25. Juni 1986 & JP-A-61 027 339

## Beschreibung

Die Erfindung betrifft ein Fahrzeuggetriebe, insbesondere für Nutzfahrzeuge und landwirtschaftliche Fahrzeuge, bei denen der Geschwindigkeitsänderungsvorrichtung ein Zentraldifferential nachgeschaltet ist, welches die Getriebeausgangsleistung auf die Vorderachse und die Hinterachse aufteilt, wobei das Zentraldifferential einen Ravigneaux-Satz enthält, dem das Antriebsmoment eines Getriebeausganges über seinen Planetenträger, der zwei Sätze von Planetenrädern trägt, zugeführt und durch seine zwei Sonnenräder entsprechend deren Radienverhältnisse an die Antriebe zur Vorderachse und zur Hinterachse abgegeben wird. Hierbei sind an der Vorder- und Hinterachse vorzugsweise ungleich große Reifen montiert.

Trotz verschiedenartiger Vorschläge muß das Antriebskonzept allradgetriebener Ackerschlepper als nicht hinreichend gelöst angesehen werden. Bei einem starren Antrieb von Vorder- und Hinterachse ergeben sich bei Null-Vorlauf der Vorderachse auf dem Acker zu geringe und bei Kurvenfahrt sofort negative Vortriebskräfte, und mit steigendem Vorlauf von zwei und mehr Prozent tritt auf der Straße Reifenverschleiß an den Vorderrädern auf, so daß der Vorderradantrieb bei Straßenfahrt abgeschaltet werden muß. Auf diese Weise kann das Gewicht auf der Vorderachse weder für den Antrieb noch für das Bremsen ausgenutzt werden. Um diesen Nachteil zu vermeiden wurde vorgeschlagen, in der Straßengruppe beim Bremsen den Vorderradantrieb automatisch zuzuschalten. Dieses kann jedoch zum Teil zu für den Fahrer unkontrollierbaren Fahrzuständen führen.

Bei Kurvenfahrt treten diese Probleme noch drastischer in Erscheinung. Mit steigendem Einschlagwinkel verliert das innen laufende Vorderrad zunehmend seinen Vorlauf, und der Schlupf kehrt sich von positiv auf negativ um. Dies bedeutet, daß das Rad "verzögert" wird und am Vortrieb des Fahrzeuges nicht mehr teilnimmt. Bei Kurvenfahrt äußert sich das darin, daß der Wendekreis bei eingeschaltetem mechanischem Frontantrieb (MFWD-Antrieb) größer wird und nicht abnimmt. Auf der Straße bedeutet das zusätzlichen Reifenverschleiß und im Feld Anscheren der Grasnarbe. Dieses tritt besonders in den engen Kurven am Vorgewende auf.

Lösungsansätze zur Behebung dieses Problems sind zusätzliche Übersetzungsstufen im Antrieb zur Vorderachse, Anschalten des äußeren Vorderrades, wie z. B. beim No-Spin-Differential etc. Hierbei ergeben sich folgende Nachteile: Sprünge in der Übersetzung zur Vorderachse bzw. Anschalten eines Radantriebes, unkontrolliertes Umschalten von Ziehen auf Bremsen, Antrieb nur an drei der vier Räder des Schleppers etc.

Durch die EP-B1-0 112 421 und die EP-B1-0 113 490 wurden Fahrzeuggetriebe mit Zentraldifferentialen der eingangs genannten Art angegeben, durch welche das Motordrehmoment in einem vorgegebenen Verhältnis auf die Vorderachse und die Hinterachse aufteilbar ist. Hierdurch lassen sich Verspannungen zwischen Vorder- und Hinterachse vermeiden.

Als Zentraldifferentiale sind Stirnradplanetengetriebe bekannt, die durch Planetensteg und Hohlrad eine große radiale Erstreckung aufweisen. Da ihr Übersetzungsverhältnis in starkem Maße von den Einbaubedingungen abhängt, schränken diese Zentraldifferentiale die konstruktiven Möglichkeiten für das Fahrzeuggetriebe ein. Findet das Zentraldifferential beispielsweise im Zusammenhang mit einem Synchrongetriebe Anwendung, so müssen seine radialen Anmessungen auf die vorgegebenen Achsabstände des Synchrongetriebes angepaßt sein. Diese Forderung ist insbesondere bei kompakten Getrieben hoher Leistungsdichte nicht immer leicht zu erfüllen.

In dem Fachbuch von J. Looman "Zahnradgetriebe", Springer-Verlag Berlin, Heidelberg, New York, 2. Auflage, 1988 wird auf den Seiten 319 bis 323 anhand der Abb. 9.17 und 9.18 ein Verteilergetriebe für Kranfahrzeuge mit einer schmalen Konstruktion beschrieben, welches ein Stirnraddifferential aufweist. Der Antrieb des Stirnraddifferentials erfolgt wahlweise über eine von zwei Stirnrädern eines Planetenträgers, der zwischen den Stirnrädern lange und kurze Planetenräder trägt. Die langen Planetenräder kämmen mit einem ersten Sonnenrad, während die kurzen Planetenräder mit einem zweiten Sonnenrad sowie jeweils einem der langen Sonnenräder kämmen. Die beiden Antriebe des Stirnraddifferentials sind zueinander koaxial und erfolgen über die beiden Sonnenräder.

Die Einleitung der Antriebskräfte senkrecht zu der Achse des Stirnraddifferentials führt einerseits zu einer relativ großen Bauweise, die insbesondere bei Fahrzeugen mit Zapfwellenantrieb nicht immer hingenommen werden kann. Zum anderen führt dies dazu, daß die radial eingeleiteten Antriebskräfte durch Lager aufgenommen werden müssen, wodurch die Konstruktion entsprechend steif ausgelegt werden muß. Die genannten Antriebskräfte sind dann besonders groß, wenn dem Stirnraddifferential ein Getriebe vorgeschaltet ist, welches die Motordrehzahl herab- und das Motordrehmoment heraufsetzt, wie dies bei Nutzfahrzeugen und landwirtschaftlichen Fahrzeugen der Fall ist.

Ferner wird in dem genannten Fachbuch auf den Seiten 388 und 389 im Zusammenhang mit den Abb. 11.48 und 11.49 ein Verteilergetriebe mit Sperrdifferential beschrieben, bei dem die Getriebeausgangsleistung axial dem Hohlrad eines Planeten-Ausgleichsgetriebes zugeführt wird. Der Planetenträger und das Sonnenrad sind je mit einem der auf einer Seite des Ausgleichsgetriebes axial herausgeführten Antriebe für den Hinter- und Vorderradantrieb verbunden. Zwischen dem Plantenträger und dem Sonnenrad befindet sich eine Kupplung, durch die sich der Ausgleichsplanetensatz sperren läßt. Ferner ist eine weitere Kupplung zwischen dem Sonnenrad und dem Antrieb der Vorderachse vorgesehen, durch die sich der Vorderradantrieb wahlweise zu- bzw. abschalten läßt. Dieses Verteilergetriebe weist wegen der Verwendung eines Hohlrades eine relativ große radiale Erstreckung auf, was bei vorgegebenem Achsabstand zwischen Getriebeausgangswelle und einer durch die Antriebsmaschine unmittelbar angetriebenen Zapfwelle nachteilig sein kann.

Die der Erfindung zugrunde liegende Aufgabe wird darin gesehen, ein Fahrzeuggetriebe der eingangs genannten Art anzugeben, bei dem die geschilderten Probleme überwunden werden. Insbesondere soll das Zentraldifferential die räumlichen Gestaltungsmöglichkeiten des Fahrzeuggetriebes nicht unnötig einschränken. Das Fahrzeuggetriebe soll mit vergleichsweise geringem technischen Aufwand und kostengünstig herstellbar sein.

Die Aufgabe wird erfindungsgemäß durch die Lehre des Patentanspruchs 1 gelöst. Vorteilhafte Ausgestaltungen und Weiterbildungen der Erfindung gehen aus den Unteransprüchen hervor.

Der Ravigneaux-Satz enthält einen Planetenträger, der einen Satz von langen Planetenrädern und einen Satz von kurzen Plantenrädern trägt. Jeder Planetenradsatz kann beispielsweise aus drei Rädern bestehen. Der Ravigneaux-Satz enthält ferner zwei Sonnenräder, die über koaxial verlaufende Antriebswellen aus dem Ravigneaux-Satz herausgeführt sind. Die langen Planetenräder kämmen mit einem größeren Sonnenrad und die kurzen Planetenräder kämmen mit einem kleineren Sonnenrad. Ferner kämmt jeweils eines der langen Planetenräder mit einem der kurzen Planetenräder.

Im Vergleich mit bekannten Zentraldifferentialen läßt sich ein Ravigneaux-Satz mit relativ geringen radialen Abmessungen realisieren, da das Hohlrad und bei gleichachsiger Anordnung auch der übergreifende Antrieb des Steges entfallen können. Radial geringe Abmessungen des Zentraldifferentials, das im Hauptantriebsstrang des Fahrzeuggetriebes angeordnet ist, ermöglichen eine kompakte Bauweise des Fahrzeuggetriebes.

Die Anordnung der Kupplung zwischen den beiden Antriebswellen, die auf einer Seite koaxial aus dem Zentraldifferential herausgeführt werden können, ist besonders günstig, da die Kupplung hier nur das Differenzmoment zwischen den Vorderachs- und Hinterachsmomenten einerseits und dem Auslegungsmoment des Zentraldifferentials andererseits zu übertragen hat.

Wird das Zentraldifferential im Auslegungspunkt betrieben, so drehen sich die gekoppelten Planetenräder in bezug auf den Planetenträger nicht, d. h.: beide Antriebswellen zur Vorder- und Hinterachse drehen synchron und führen Momente, die der Standübersetzung entsprechen. Eine Differentialwirkung kommt zustande, wenn die Hinterräder bei Kurvenfahrt die auf einem größeren Kreis laufenden Vorderräder veranlassen, schneller zu laufen. Vorderachse und Hinterachse arbeiten dabei entsprechend ihrem auslegungsgemäßen Drehmomentenverhältnis.

Aufgrund der unterschiedlichen Einsatzverhältnisse und Belastungszustände des Fahrzeuges, insbesondere eines Ackerschleppers, ist dieser Idealzustand nicht in jedem Fall einzuhalten. Beim Pflügen müssen z. B. 80 bis 100 % des Motormomentes über die Hinterachse abgegeben werden, während für Transportarbeiten eine Aufteilung von vorzugsweise 35 % auf die Vorderachse und 65 % auf die Hinterachse vorgenommen werden kann.

Eine bevorzugte Ausgestaltung der Erfindung schlägt daher vor, das Zentraldifferential schaltbar zu machen und zwischen den Antriebswellen des Ravigneaux-Satzes zur Vorderachse und zur Hinterachse eine Kupplung anzuordnen. Die Kupplung läßt sich zwischen zwei Arbeits-Modi schalten. In einem Differentialmodus ist das Zentraldifferential freilaufend, und es erfolgt eine Drehmomentenaufteilung entsprechend den Radienverhältnissen der Sonnenräder auf die Vorder- und Hinterachse. In einem Blockmodus werden der Vorderrad- und der Hinterradantrieb miteinander gekuppelt, wobei das Zentraldifferential gesperrt und wirkungslos wird. Beim Blockmodus ergibt sich die Drehmomentenaufteilung aus den Übertragungsmöglichkeiten der Räder und hängt von den Bodenverhältnissen (z. B. griffiger oder rutschiger Untergrund) ab. Die Antriebsverhältnisse beim Blockmodus entsprechen somit denen einer bekannten MFWD-Kupplung im eingerückten Zustand, bei der die Vorder- und Hinterachse starr von der Ausgangswelle des Getriebes angetrieben werden.

Im Gegensatz zum bisher üblichen MFWD-Antrieb, bei dem der Vierradantrieb unter bestimmten Betriebsbedingungen (z. B. bei hohen Geschwindigkeiten oder scharfen Kurven) abgeschaltet werden muß, kann gemäß der erfindungsgemäßen Ausbildung der Allradantrieb ständig im Eingriff bleiben. Eine Steuereinrichtung zum automatischen Ein- und Ausschalten des MFWD ist entbehrlich.

Da die Vorderräder wegen ihrer kleineren Halbmesser und Auflagefläche einen größeren Schlupf als die Hinterräder aufweisen, und um bei Kurvenfahrt einen Ausgleich für die unterschiedlichen Anrollwege zu schaffen, ist es vorteilhaft, wenn der Antrieb der Vorderachse in bezug auf die Hinterachse mit einem gewissen Vorlauf (2 bis 5 %) ausgelegt ist. Damit ergeben sich im Blockmodus die gleichen Einsatzverhältnisse wie bei den bekannten Ackerschleppern. Der Vorlauf kann in dem dem Zentraldifferential nachgeschalteten Räderstrang realisiert werden (Übersetzungsanpassung).

Ein weiterer Vorteil des Vorlaufes der Vorderachse ergibt sich daraus, daß das im Differentialmodus arbeitende Zentraldifferential auch bei Geradeausfahrt immer mit einer relativen Drehzahl umläuft. Durch den ständigen Differentialausgleich drehen sich die Räder des Differentials relativ zueinander, und es wird vermieden, daß die Drehmomentenübertragung vorwiegend über ein Zähnepaar erfolgt und dieses infolgedessen einschlägt.

Zweckmäßigerweise ist eine Steuervorrichtung vorgesehen, die das Zentraldifferential in kritischen Betriebszuständen (z. B. Vorderräder auf Eis) automatisch sperrt. Damit geht der Kraftschluß weder im Antrieb noch beim Bremsen verloren.

Die Kupplung kann vorteilhaft als Sicherheitskupplung für die Vorderachse ausgelegt werden. Eine Sicherheitskupplung überträgt lediglich das zulässige Drehmoment. Bei höheren Drehmomenten rutscht die Sicherheitskupplung durch und schützt damit die Antriebskomponenten. Die Auslegung der Sicherheitskupplung erfolgt beispielsweise durch die Auswahl der Anzahl der Lamellen und des Anstelldruckes der Kupplung, wobei das Rutschmoment der Kupplung so eingestellt wird, daß das für die Vorderachse zulässige Moment übertragen wird.

Eine besonders bevorzugte Ausgestaltung der Erfindung sieht vor, daß die Endstufe der Geschwindigkeitsänderungsvorrichtung wenigstens ein in seinem Übersetzungsverhältnis umschaltbares Planetengetriebe aufweist. Dieses als Getriebeendstufe ausgebildete Planetengetriebewirkt beispielsweise als Gruppen- bzw. Bereichsgetriebe, welches einem Gangschaltgetriebe nachgeordnet ist. Vorzugsweise enthält dieses umschaltbare Planetengetriebe ebenfalls einen Ravigneaux-Satz.

Eine sehr kompakte Bauweise mit Energieumsetzung auf kleinstem Raum und zu geringen Baukosten wird dadurch erreicht, daß das umschaltbare Planetengetriebe und das Zentraldifferentialgetriebe integriert und zu einem gekoppelten Räderumlaufgetriebe zusammengefaßt sind. Beide Getriebeteile weisen dabei vorzugsweise gemeinsame Bauteile auf. Hierfür eignet sich besonders ein gemeinsamer Planetenträger, der die Planetenräder sowohl des umschaltbaren Planetengetriebes als auch die des Zentraldifferentials trägt.

Vorzugsweise weist das als Ravigneaux-Satz ausgebildete umschaltbare Planetengetriebe ein angetriebenes Sonnenrad, zwei Hohlräder und einen als Antrieb ausgebildeten Planetenträger auf. Ferner sind zwischen einem ersten Hohlrad und dem Getriebegehäuse eine erste Kupplung und zwischen dem Sonnenrad und einem zweiten Hohlrad eine zweite Kupplung zur Umschaltung zwischen zwei Übersetzungsverhältnissen angeordnet. Mit dem Einrücken der ersten Kupplung läßt sich z. B. eine Ackergruppe und mit dem Einrücken der zweiten Kupplung läßt sich eine Straßengruppe einschalten. Ferner kann zwischen dem ersten Hohlrad und dem zweiten Hohlrad eine dritte Kupplung angeordnet sein, durch die sich eine Rückwärtsgruppe einschalten läßt.

Das der Endstufe vorgeschaltete Hauptgetriebe (z. B. Gangschaltgetriebe) ist vorzugsweise ein stufenlos verstellbares Getriebe, kann jedoch auch ein synchronisiertes oder unter Last schaltbares Getriebe sein. Wird als Hauptgetriebe ein Synchron-, Lastschalt- oder stufenlos verstellbares Getriebe verwendet, so liefert dieses sein Antriebsdrehmoment über eine Ausgangswelle an die beispielsweise als Gruppengetriebe ausgebildete Endstufe des Getriebes. Bei einem stufenlos verstellbaren Hauptgetriebe kann das Gruppengetriebe zusätzlich über mindestens eine zweite Eingangswelle angetrieben werden. Hierbei ist es von besonderem Vorteil, die Endstufe des Getriebes als Summengetriebe mit wenigstens zwei Eingängen auszubilden. Dies ermöglicht es, das gesamte Fahrzeuggetriebe als stufenlos schaltbares Getriebe auszulegen.

Der Vorteil eines stufenlos verstellbaren Getriebes als Hauptgetriebe gegenüber einem Synchrongetriebe oder Lastschaltgetriebe besteht darin, daß die Schaltelemente der zu schaltenden Gänge im Schaltpunkt mit Synchrondrehzahlen umlaufen, so daß beim Gangwechsel keine Schaltstöße, wie z. B. beim Lastschaltgetriebe auftreten. Das Synchrongetriebe läßt sich hingegen unter Last nicht schalten.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Darstellung eines vollsynchronisierten erfindungsgemäßen Fahrzeuggetriebes mit Zentraldifferential,
- Fig. 2: den schematisch dargestellten Querschnitt durch einen Ravigneaux-Satz,
- Fig. 3: die schematische Darstellung eines stufenlos verstellbaren Gangschaltgetriebes mit nachgeordnetem synchronisierten Gruppengetriebe und Zentraldifferential,
- Fig. 4: die schematische Darstellung eines stufenlos verstellbaren Gangschaltgetriebes mit nachgeordnetem integrierten Gruppen- und Zentraldifferentialgetriebe,
- Fig. 5: die schematische Darstellung eines Überlagerungsgetriebes mit zwei Ausgangswellen und nachgeordnetem integrierten Gruppen- und Zentraldifferentialgetriebe.

Sich entsprechende Teile werden in den nachfolgend beschriebenen Figuren mit den gleichen Bezugszeichen versehen.

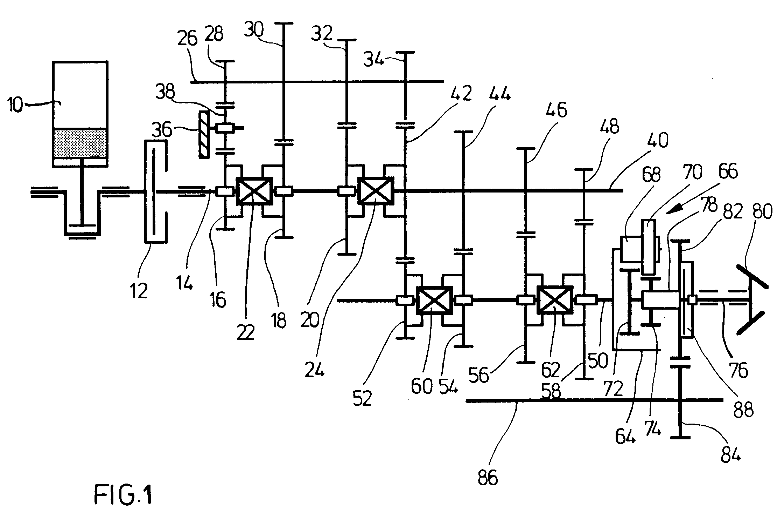

Das in Fig. 1 dargestellte Fahrzeuggetriebe setzt sich im wesentlichen zusammen aus einem vollsynchronisierten Schaltgetriebe, einem vollsynchronisierten Gruppengetriebe und einem Zentraldifferential.

Eine Verbrennungskraftmaschine 10 des nicht näher dargestellten Fahrzeuges treibt über eine Hauptkupplung 12 die Getriebeeingangswelle 14 des Schaltgetriebes an, auf der Losräder 16, 18 und 20 gelagert sind. Durch zweiseitige Schaltmuffen 22 und 24 lassen sich die Losräder 16, 18, 20 mit der Getriebeeingangswelle 14 verbinden. Eine Nebenwelle 26 trägt drehfest vier Festräder 28, 30, 32, 34, von denen das zweite 30 und dritte 32 mit den Losrädern 18 und 20 kämmen und bei entsprechend eingerückter Schaltmuffe 22, 24 den ersten bzw. zweiten Gang bilden. Das erste Losrad 16 steht mit dem Festrad 28 der Nebenwelle 26 über ein am Getriebegehäuse 36 gelagertes Umkehrrad 38 in Eingriff und bildet den Rückwärtsgang.

Durch die zweite Schaltmuffe 24 läßt sich die Getriebeeingangswelle 14 mit einer Gruppeneingangswelle 40, die vier Festräder 42, 44, 46, 48 trägt, verbinden, wodurch sich der dritte Gang ergibt. Die Nebenwelle 26 und die Gruppengetriebeeingangswelle 40 stehen über die Festräder 34 und 42 in ständigem Eingriff.

Auf einer Gruppengetriebeausgangswelle 50 sind vier Losräder 52, 54, 56, 58, die mit den Festrädern 42, 44, 46, 48 der Gruppeneingangswelle kämmen, angeordnet. Sie lassen sich über zweiseitige Schaltmuffen 60, 62 mit der Welle 50 verbinden, wodurch vier Gruppen schaltbar sind.

Auf der Gruppengetriebeausgangswelle 50 ist ferner der Planetenträger 64 eines Ravigneaux-Satzes 66 drehfest gelagert, der als Zentraldifferential dient. Auf dem Planetenträger 64 ist ein Satz von langen Planetenrädern 68 und ein Satz von kurzen Planetenrädern 70 angeordnet. Jeder Planetenradsatz kann beispielsweise aus drei Rädern bestehen, von denen jedoch nur jeweils ein Rad 68, 70 dargestellt wurde. Der Ravigneaux-Satz 66 enthält ferner zwei Sonnenräder 72, 74, die über koaxial verlaufende Antriebswellen 76, 78 aus dem Ravigneaux-Satz 66 herausgeführt sind.

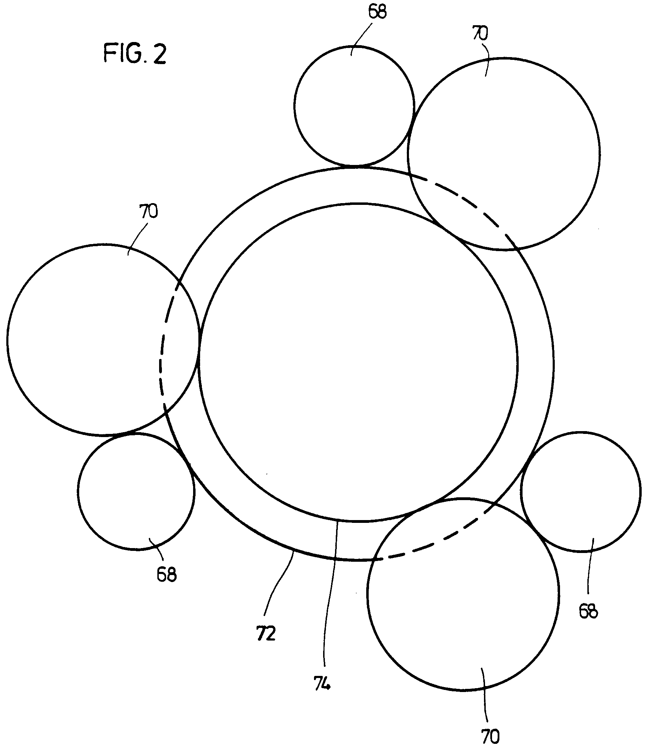

Der Eingriff der verschiedenen Zahnräder des Ravigneaux-Satzes 66 geht aus Fig. 2 hervor. Auf dem nicht näher dargestellten Planetenträger sind jeweils drei lange Planetenräder 68 und drei kurze Planetenräder 70 drehbar gelagert. Die langen Planetenräder 68 kämmen mit dem größeren Sonnenrad 72 und die kurzen Planetenräder 70 kämmen mit dem kleineren Sonnenrad 74. Ferner kämmt jeweils eines der langen Planetenräder 68 mit einem der kurzen Planetenräder 70.

Wird bei ruhendem Planetenträger 64 beispielsweise das größere Sonnenrad 72 gedreht, so wird über die langen Planetenräder 68 und die kurzen Planetenräder 70 das andere kleinere Sonnenrad 74 in umgekehrter Drehrichtung angetrieben. Dabei ergibt sich gleichzeitig eine Drehzahlerhöhung entsprechend dem Durchmesserverhältnis der beiden Sonnenräder 72, 74. Diese Funktionsweise des Ravigneaux-Satzes ermöglicht den Einsatz als Differentialgetriebe.

Beim Antrieb des Ravigneaux-Satzes 66 über seinen Planetenträger 64 erfolgt eine Drehmomentenaufteilung auf die Antriebswellen 76, 78 der beiden Sonnenräder 72, 74 entsprechend dem Durchmesserverhältnis der beiden Sonnenräder 72, 74. Die Antriebswelle 76 des größeren Sonnenrades 72 steht mit einem Kegelrad 80 eines nicht dargestellten Differentials der Hinterachse in Verbindung. Die Antriebswelle 78 des kleineren Sonnenrades 74 ist als Hohlwelle ausgebildet, durch die die zuerst genannte Antriebswelle verläuft. Sie trägt ein Zahnrad 82, welches mit einem Zahnrad 84 der Frontantriebswelle 86 zum Antrieb der nicht dargestellten Vorderachse in Verbindung steht.

Die beiden Antriebswellen 76, 78 lassen sich durch eine Kupplung 88 miteinander verbinden, so daß die Differentialwirkung des Ravigneaux-Satzes 66 unterdrückt wird.

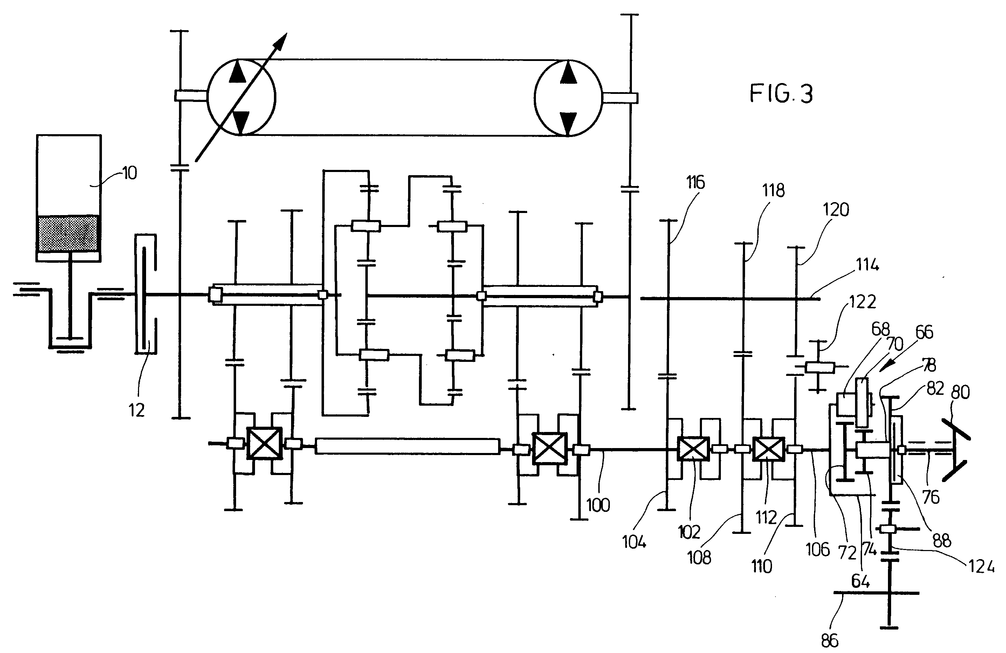

In Fig. 3 ist das in Fig. 1 dargestellte synchronisierte Gangschaltgetriebe durch ein stufenlos schaltbares hydrostatisch-mechanisches Leistungsverzweigungsgetriebe ersetzt. Ein derartiges Getriebe wurde in der deutschen Patentanmeldung mit dem Aktenzeichen P 41 15 623.4, auf die zum Zwecke der Offenbarung Bezug genommen wird, im einzelnen beschrieben.

Die Ausgangswelle des hydrostatisch-mechanischen Getriebes der Fig. 3 ist gleichzeitig die Eingangswelle 100 eines synchronisierten Gruppengetriebes. Mit der Welle 100 ist das Rad 104 fest verbunden, welches die Zwischenwelle 114 über das Rad 116 antreibt. Durch die Schaltmuffe 102 läßt sich alternativ die Ausgangswelle 106 des Gruppengetriebes direkt mit der Eingangswelle 100 kuppeln oder indirekt über die Zwischenwelle 114 und die Räder 118 und 120 bzw. 108 und 110 schalten. Die Ausgangswelle 106 trägt zwei Losräder 108, 110, die über eine Schaltmuffe 112 mit der Ausgangswelle 106 kuppelbar sind.

Das erstgenannte Losrad 104 des Gruppengetriebes kämmt mit einem auf einer Nebenwelle 114 angeordneten Festrad 116. Die Nebenwelle 114 trägt noch zwei weitere Festräder 118. Eines dieser Festräder 118 kämmt mit einem Losrad 108 der Ausgangswelle 106, während zwischen dem anderen Festrad 120 und einem weiteren Losrad 110 der Ausgangswelle 106 ein Umkehrrad 122 angeordnet ist.

Die erste Schaltmuffe 102 ermöglicht eine Umschaltung zwischen Straßengruppe einerseits und Feld- bzw. Rückwärtsgruppe andererseits. Durch die zweite Schaltmuffe 112 läßt sich das Gruppengetriebe zwischen Ackergruppe und Rückwärtsgruppe umschalten.

Die Ausgangswelle 106 des Gruppengetriebes ist mit dem Planetenträger 64 eines Ravigneaux-Satzes 66 verbunden. Der Ravigneaux-Satz 66 ist in gleicher Weise aufgebaut, wie der anhand der Fig. 1 beschriebene, so daß auf eine erneute Beschreibung verzichtet wird. Im Unterschied zur Fig. 1 ist gemäß Fig. 3 zwischen das mit der Antriebswelle 78 des kleineren Sonnenrades 74 verbundene Zahnrad 82 und das Zahnrad 84 der Frontantriebswelle 86 ein Zwischenrad 124 eingefügt, durch das sich der Anstand zwischen den Getriebewellen 106 und 86 vergrößern und die Drehrichtung umkehren läßt.

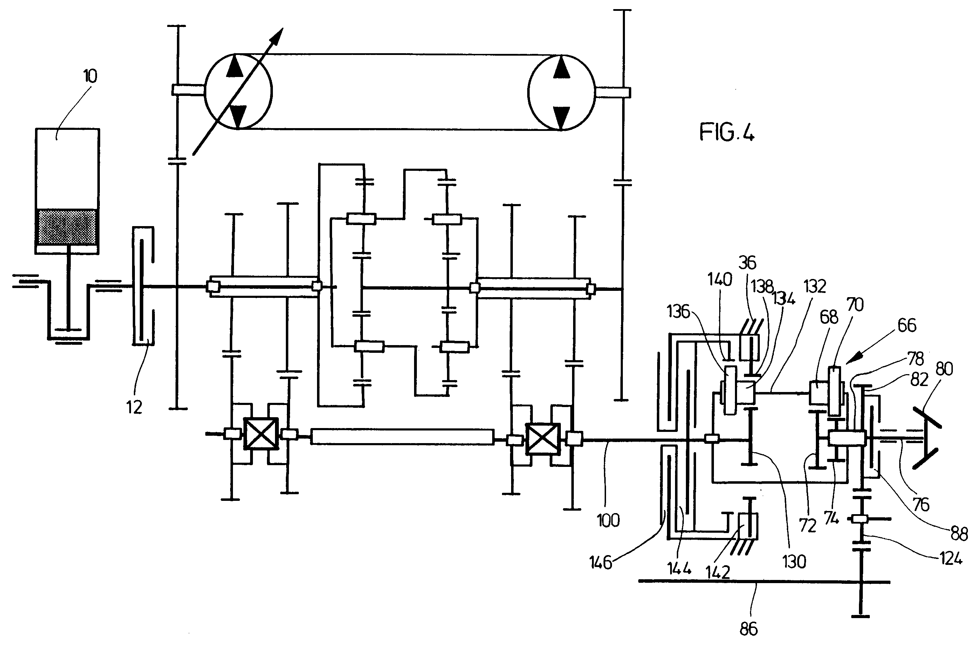

Das in Fig. 4 dargestellte Fahrzeuggetriebe unterscheidet sich von dem Getriebe gemäß Fig. 3 durch die Ausbildung des Gruppengetriebes, das in Fig. 4 als schaltbares Planetengetriebe ausgebildet ist. Kernstück dieses Planetengetriebes ist ein Ravigneaux-Satz 126, der durch mehrere Kupplungen unter Last schaltbar ist.

Die Ausgangswelle 100 des hydrostatisch-mechanischen Getriebes trägt drehfest das Sonnenrad 130 des Ravigneaux-Satzes 126. Ferner ist auf dieser Welle 100 ein Planetenträger 132 drehbar gelagert. Der Planetenträger 132 trägt einen Satz langer Planetenräder 134 und einen Satz kurzer Planetenräder 136, deren Verzahnungen mit jeweils einem Hohlrad 138, 140 in Eingriff stehen. Die Planetenräder 134 und 136 eines Satzes kämmen miteinander entsprechend der anhand Fig. 2 beschriebenen Anordnung.

Das mit dem Satz längerer Planetenräder 134 im Eingriff stehende Hohlrad 138 läßt sich durch eine Bremse 142 gegen das Getriebegehäuse 36 und das mit dem Satz kurzer Planetenräder 136 in Eingriff stehende Hohlrad 140 läßt sich durch die Bremse 146 ebenfalls gegen das Getriebegehäuse 36 abstützen. Durch eine Kupplung 144 läßt sich das mit dem Satz kürzerer Planetenräder 136 im Eingriff stehende Hohlrad 140 mit der Eingangswelle 100 verbinden.

Wird die Kupplung 144 bei geöffneten Bremsen 142 und 146 geschlossen, so läuft das Gruppengetriebe 126 als Block um. Auf diese Weise wird die Straßengruppe dargestellt. Durch Schließen der Bremse 142 bei gleichzeitigem Öffnen der Kupplung 144 oder der Bremse 146 schaltet das Getriebe von der Staßenoder Rückwärtsgruppe in die Ackergruppe. Durch Schließen der Bremse 146 bei gleichzeitigem Öffnen der Kupplung 144 oder der Bremse 142 schaltet das Getriebe von der Staßen- oder Ackergruppe in die Rückwärtsgruppe.

Der Planetenträger 132 des Gruppengetriebes ist mit dem Planetenträger 64 des Differentialgetriebes gekoppelt. Es handelt sich um ein einheitliches Bauteil, das die Planetenräder 68, 70, 134, 136 beider Ravigneaux-Sätze 66, 126 trägt.

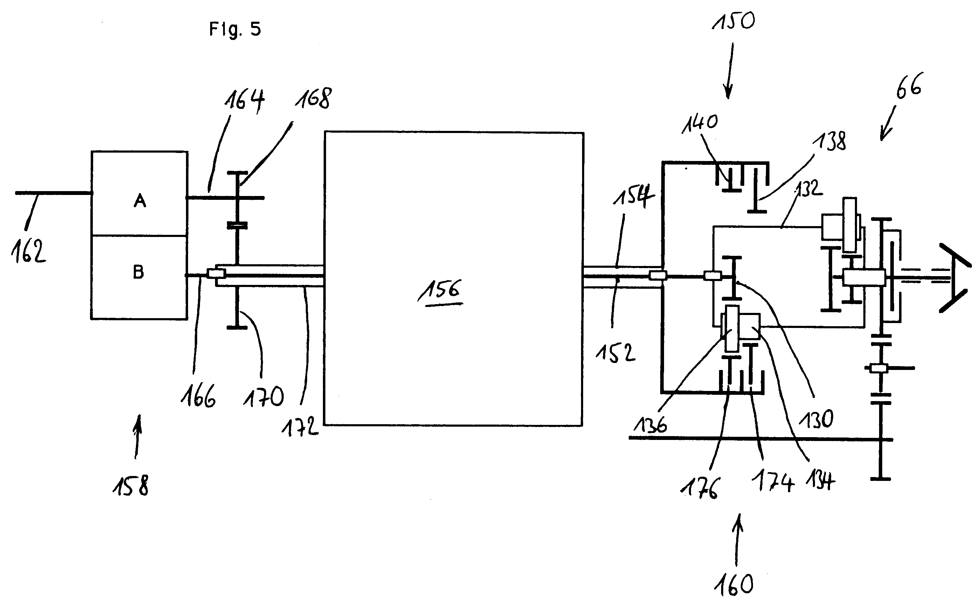

Das in Fig. 5 dargestellte Fahrzeuggetriebe unterscheidet sich von den bisher vorgestellten Getrieben insbesondere dadurch, daß das Gruppengetriebe 150 nicht von einer Eingangswelle (z. B. die Welle 100 in Fig. 4), sondern von zwei Eingangswellen 152 und 154 angetrieben wird.

Die Drehzahlen der Eingangswellen 152, 154 resultieren aus einem Überlagerungsgetriebe 156, das unterschiedlich aufgebaut sein kann und auf das an dieser Stelle im Detail nicht weiter eingegangen werden soll. Es wird jedoch auf das stufenlose Verstellgetriebe in Fig. 3 und Fig. 4 hingewiesen.

Das Überlagerungsgetriebe 156 liegt zwischen der Antriebseinheit 158 und einer Antriebseinheit 160, bestehend aus dem Gruppengetriebe 150 und den Zentraldifferential 66.

Von Bedeutung ist in diesem Fall die Tatsache, daß die Leistung des Motors, welche die Welle 162 führt, in Block A aufgesplittert wird in einen mechanischen Anteil mit im wesentlichen konstanter Drehzahl auf der Welle 164 und einen stufenlos verstellbaren, vorzugsweise hydraulischen Anteil, welcher über die Welle 166 abgeführt wird. In diesem Fall repräsentiert der Block A eine hydraulische Pumpe und der Block B einen hydraulischen Motor. Die stufenlose Verstellung kann jedoch auch auf andere Art und Weise dargestellt werden, so z. B. als Kettenwandler.

Mit der Welle 164 ist das Rad 168 treibend verbunden, so daß die mechanische Leistung vorzugsweise bei konstanter Drehzahl von der Welle 164 über die Räder 168 und 170 auf die Hohlwelle 172 geführt wird.

Der in der Drehzahl stufenlos verstellbare Leistungsanteil wird von der Welle 166 geführt. Die mechanischen und hydraulischen Leistungsäste können im Überlagerungsgetriebe 156 weiter gewandelt werden, bevor sie in der Antriebseinheit 160 wieder zusammengeführt werden.

In der Straßengruppe wird die Kupplung 174 geschlossen, und die Drehmomente der Vollwelle 152 und der Hohlwelle 154 werden durch das Summengetriebe 150, hier vorzugsweise als Ravigneaux-Satz dargestellt, zusammengeführt. Die Drehzahl ist stufenlos verstellbar, und bei gleicher Drehzahl von Hohlwelle 154 und Vollwelle 152 läuft das Getriebe 150 im Block um. Die beiden Antriebswellen 152, 154 ersetzen somit die Kupplung 144 aus Fig. 4.

Bei geschlossener Kupplung 176 und offener Kupplung 174 ergibt sich ein zweiter Übersetzungsbereich. Bei weitgehend konstanter Drehzahl der Welle 154 und verstellbarer Drehzahl der Welle 152 ergeben sich die beiden Bereiche durch Subtraktion bzw. Addition der Drehzahlen in bezug auf den gemeinsamen Koppelpunkt.

## Patentansprüche

1. Fahrzeuggetriebe, insbesondere für Nutzfahrzeuge und landwirtschaftliche Fahrzeuge, bei denen der Geschwindigkeitsänderungsvorrichtung ein Zentraldifferential nachgeschaltet ist, welches die Getriebeausgangsleistung auf die Vorderachse und die Hinterachse aufteilt, wobei das Zentraldifferential einen Ravigneaux-Satz (66) enthält, dem das Antriebsmoment eines Getriebeausganges (50, 132) über seinen Planetenträger (64), der zwei Sätze von Planetenrädern (68, 70) trägt, zugeführt und durch seine zwei Sonnenräder (72, 74) entsprechend deren Radienverhältnisse an die Antriebe (76, 78) zur Vorderachse und zur Hinterachse abgegeben wird, dadurch gekennzeichnet, daß die Getriebeausgangsleistung dem Ravigneaux-Satz (66) über dessen Planetenträger (64) koaxial von einer Seite zugeführt wird, daß die beiden Antriebe (76, 78) der Sonnenräder (72, 74) koaxial auf der anderen Seite aus dem Ravigneaux-Satz (66) herausgeführt sind und daß zwischen den beiden Sonnenrädern (72, 74) eine diese wahlweise gegeneinander blockierende Kupplung (88) angeordnet ist.

2. Fahrzeuggetriebe nach Anspruch 1, dadurch gekennzeichnet, daß eine Drehmomentenaufteilung auf die Vorderachse und die Hinterachse von ca. 35 zu 65 erfolgt.

3. Fahrzeuggetriebe nach Anspruch 1 oder 2, dadurch gekennzeichnet, daß in bezug auf das gesperrte Differential der Antrieb (78) zur Vorderachse relativ zum Antrieb (76) der Hinterachse einen Vorlauf von 2 bis 5 % aufweist.

4. Fahrzeuggetriebe nach einem der Ansprüche 1 bis 3, dadurch gekennzeichnet, daß eine Steuervorrichtung vorgesehen ist, die das Zentraldifferential in kritischen Betriebszuständen automatisch sperrt.

5. Fahrzeuggetriebe nach Anspruch 4, dadurch gekennzeichnet, daß bei Überschreiten einer vorgebbaren Drehzahldifferenz zwischen Vorder- und Hinterrädern das Zentraldifferential gesperrt wird.

6. Fahrzeuggetriebe nach einem der Ansprüche 1 bis 5, dadurch gekennzeichnet, daß die Kupplung (88) als Sicherheitskupplung für die Vorderachse ausgelegt ist.

7. Fahrzeuggetriebe nach einem der Ansprüche 1 bis 6, dadurch gekennzeichnet, daß die Endstufe der Geschwindigkeitsänderungsvorrichtung wenigstens ein in seinem Übersetzungsverhältnis umschaltbares Planetengetriebe aufweist.

8. Fahrzeuggetriebe nach Anspruch 7, dadurch gekennzeichnet, daß das umschaltbare Planetengetriebe einen Ravigneaux-Satz (126) enthält.

9. Fahrzeuggetriebe nach Anspruch 7 oder 8, dadurch gekennzeichnet, daß das umschaltbare Planetengetriebe (126) und das Planetengetriebe (66) des Zentraldifferentials miteinander integriert sind und wenigstens ein gemeinsames Bauteil (64, 132) aufweisen.

10. Fahrzeuggetriebe nach einem der Ansprüche 8 oder 9, dadurch gekennzeichnet, daß das als Ravigneaux-Satz (126) ausgebildete umschaltbare Planetengetriebe ein angetriebenes Sonnenrad (130), zwei Hohlräder (138, 140) und einen als Antrieb ausgebildeten Planetenträger (132), der zwei Sätze von Planetenrädern (134, 136) trägt, aufweist und daß zwischen einem ersten Hohlrad (138) und dem Getriebegehäuse (36) eine erste Bremse (142) und zwischen dem Sonnenrad (130) und einem zweiten Hohlrad (140) eine Kupplung (144) zur Umschaltung zwischen zwei Übersetzungsverhältnissen angeordnet sind.

11. Fahrzeuggetriebe nach Anspruch 10, dadurch gekennzeichnet, daß zwischen dem ersten Hohlrad (138) und dem zweiten Hohlrad (140) eine zweite Bremse (146) angeordnet ist.

12. Fahrzeuggetriebe nach einem der Ansprüche 1 bis 11, dadurch gekennzeichnet, daß die Endstufe der Geschwindigkeitsänderungsvorrichtung wenigstens ein als Summengetriebe mit wenigstens zwei Eingängen (152, 154) ausgelegtes Planetengetriebe (150) aufweist, das wenigstens zwischen zwei Übersetzungsverhältnissen umschaltbar ist.

13. Fahrzeuggetriebe nach Anspruch 12, dadurch gekennzeichnet, daß das Summengetriebe einen Ravigneaux-Satz (150) enthält und ein Eingang (152) mit dem Sonnenrad (130) verbunden ist und ein zweiter Eingang (154) mit wenigstens einem Hohlrad (138, 140) kuppelbar ist.

## Claims

1. A vehicle transmission, especially for commercial vehicles and agricultural vehicles, in which a centre differential is connected downstream of the speed-changing device and divides the transmission output power between the front axle and the rear axle, wherein the centre differential comprises a Ravigneaux set (66) to which the drive torque of a transmission output (50, 132) is imparted through its planet carrier (64) which carries two sets of planet wheels (68, 70) and from which the drive torque is delivered to the drives (76, 78) to the front axle and the rear axle via its two sun wheels (72, 74), in accordance with their ratio of radii, characterized in that the transmission output power is applied to the Ravigneaux set coaxially from one side, in that the two drives (76, 78) from the sun wheels (72, 74) are taken coaxially from the other side of the Ravigneaux set (66) and in that a clutch (88) is arranged between the two sun wheels (72, 74) for selectively locking these together.

2. A vehicle transmission according to claim 1, characterized in that a torque division of about 35 to 65 between the front axle and the rear axle is effected.

3. A vehicle transmission according to claim 1 or 2, characterized in that the drive (78) to the front axle has an overrun of 2 to 5% relative to the drive (76) to the rear axle with the differential locked.

4. A vehicle transmission according to any of claims 1 to 3, characterized in that there is a control device which automatically locks the centre differential under critical driving conditions.

5. A vehicle transmission according to claim 4, characterized in that the centre differential is locked on overstepping a predetermined difference between the speeds of rotation of the front and rear wheels.

6. A vehicle transmission according to any of claims 1 to 5, characterized in that the clutch (88) is designed as a safety clutch for the front axle.

7. A vehicle transmission according to any of claims 1 to 6, characterized in that the final stage of the speed change device comprises at least one planetary gear with a switched transmission ratio.

8. A vehicle transmission according to claim 7, characterized in that the switched planetary gear comprises a Ravigneaux set (126).

9. A vehicle transmission according to claim 7 or 8, characterized in that the switched planetary gear (126) and the planetary gear (66) of the centre differential are integrated with each other and comprise at least one component (64, 132) in common.

10. A vehicle transmission according to claim 8 or 9, characterized in that the switched planetary gear formed as a Ravigneaux set (126) comprises a driven sun wheel (130), two ring gears (138, 140) and a planet carrier (132) formed as the output drive, which carries two sets of planet wheels (134, 136) and in that a first brake is arranged between a first ring gear (138) and the transmission housing (36) and a clutch (144) for switching between two transmission ratios is arranged between the sun wheel (130) and a second ring gear (140).

11. A vehicle transmission according to claim 10, characterized in that a second brake (146) is arranged between the first ring gear (138) and the second ring gear (140).

12. A vehicle transmission according to any of claims 1 to 11, characterized in that the final stage of the speed change device comprises at least one planetary gear (150) designed as a summing gear with at least two inputs (152, 154), and which can be switched at least between two transmission ratios.

13. A vehicle transmission according to claim 12, characterized in that the summing gear comprises a Ravigneaux set (150) and one input (152) is connected to the sun wheel (130) and a second input (154) can be coupled to at least one ring gear (138, 140).

## Revendications

1. Transmission pour véhicules, notamment pour des véhicules utilitaires et des véhicules agricoles dans lesquels la boîte de changement de vitesse est suivie d'un différentiel central qui répartit la puissance de sortie de boîte sur l'essieu avant et l'essieu arrière, le différentiel central contenant un engrenage Ravigneaux (66) qui reçoit le couple de sortie d'une sortie de boîte (50, 132) par son porte-satellites (64), lequel porte deux jeux de pignons satellites (68, 70), et qui délivre ce couple par ses deux roues solaires (72, 74), conformément aux rapports de rayons, aux arbres de sortie (76, 78) menant à l'essieu avant et à l'essieu arrière, **caractérisée** en ce que la puissance de sortie de boîte est transmise coaxialement par un côté à l'engrenage Ravigneaux (66) par son portesatellites (64), en ce que les deux arbres de sortie (76, 78) des roues solaires (72, 74) sortent coaxialement de l'engrenage Ravigneaux (66) sur l'autre côté, et en ce qu'un embrayage (88) est disposé entre les deux roues solaires (72, 74), embrayage qui bloque sélectivement ces dernières l'une par rapport à l'autre.

2. Transmission pour véhicules selon la revendication 1, **caractérisée** en ce qu'il s'effectue une répartition du couple de rotation sur l'essieu avant et l'essieu arrière d'environ 35:65.

3. Transmission pour véhicules selon la revendication 1 ou 2, **caractérisée** en ce que, par rapport au différentiel bloqué, l'arbre de sortie (78) menant à l'essieu avant présente une avance de 2 à 5 % par rapport à l'arbre de sortie (76) menant à l'essieu arrière.

4. Transmission pour véhicules selon l'une quelconque des revendications 1 à 3, **caractérisée** en ce qu'il est prévu un dispositif de commande qui bloque automatiquement le différentiel central dans des conditions critiques de service.

5. Transmission pour véhicules selon la revendication 4, **caractérisée** en ce que le différentiel central est bloqué en cas de dépassement d'une différence prédéterminable de vitesse de rotation entre les roues avant et les roues arrière.

6. Transmission pour véhicules selon l'une quelconque des revendications 1 à 5, **caractérisée** en ce que l'embrayage (88) est conçu comme limiteur de couple pour l'essieu avant.

7. Transmission pour véhicules selon l'une quelconque des revendications 1 à 6, **caractérisée** en ce que l'étage final de la boîte de changement de vitesse présente au moins un train planétaire à rapport de transmission commutable.

8. Transmission pour véhicules selon la revendication 7, **caractérisée** en ce que le train planétaire commutable contient un engrenage Ravigneaux (126).

9. Transmission pour véhicules selon la revendication 7 ou 8, **caractérisée** en ce que le train planétaire commutable (126) et l'engrenage planétaire (66) du différentiel central sont mutuellement intégrés et présentent au moins un élément de construction commun (64, 132).

10. Transmission pour véhicules selon la revendication 8 ou 9, **caractérisée** en ce que le train planétaire commutable conçu comme engrenage Ravigneaux (126) présente une roue solaire entraînée (130), deux couronnes (138, 140) et un porte-satellites (132) conçu comme arbre de sortie, qui porte deux jeux de pignons satellites (134, 136), et en ce qu'un premier frein (142) est disposé entre une première couronne (138) et le carter de boîte (36), et un embrayage (144) de commutation entre deux rapports de transmission est disposé entre la roue solaire (130) et une seconde couronne (140).

11. Transmission pour véhicules selon la revendication 10, **caractérisée** en ce qu'un second frein (146) est disposé entre la première couronne (138) et la seconde couronne (140).

12. Transmission pour véhicules selon l'une quelconque des revendications 1 à 11, **caractérisé** en ce que l'étage final de la boîte de changement de vitesse présente au moins un train planétaire (150) conçu comme train totalisateur à au moins deux entrées (152, 154), commutable au mains entre deux rapports de transmission.

13. Transmission pour véhicules selon la revendication 12, **caractérisée** en ce que le train totalisateur contient un engrenage Ravigneaux (150) et une entrée (152) est reliée à la roue solaire (130), tandis que la seconde entrée (154) peut être accouplée à au moins une couronne (138, 140).
